(19) Europäisches Patentamt
European Patent Office
Office européen des brevets

(11) **EP 3 276 846 B1**

(12) **EUROPEAN PATENT SPECIFICATION**

(45) Date of publication and mention
of the grant of the patent:
**06.01.2021   Bulletin 2021/01**

(51) Int Cl.:
*H04B 7/0452* (2017.01)    *H04J 11/00* (2006.01)
*H04L 5/00* (2006.01)    *H04W 72/04* (2009.01)
*H04B 7/06* (2006.01)

(21) Application number: **16305955.3**

(22) Date of filing: **25.07.2016**

(54) **MULTIPLE ANTENNA MULTIUSER DOWNLINK TRANSMISSION**

MEHRFACH-ANTENNEN-MEHRBENUTZER-DOWNLINK-ÜBERTRAGUNG

TRANSMISSION DE LIAISON DESCENDANTE MULTI-UTILISATEURS À ANTENNES MULTIPLES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**31.01.2018   Bulletin 2018/05**

(73) Proprietor: **Alcatel Lucent
91620 Nozay (FR)**

(72) Inventors:
• **GERACI, Giovanni**
**Dublin, 15 (IE)**
• **FANG, Dong**
**Dublin, 15 (IE)**
• **CLAUSSEN, Holger**
**Dublin, 15 (IE)**

(74) Representative: **Mills, Julia et al
Script IP Limited
18 Bridge Street
Frome Somerset BA11 1BB (GB)**

(56) References cited:
**US-A1- 2014 314 006**

• **SHIMEI LIU ET AL: "User selection and power schedule for downlink non-orthogonal multiple access (NOMA) system", 2015 IEEE INTERNATIONAL CONFERENCE ON COMMUNICATION WORKSHOP (ICCW), 1 June 2015 (2015-06-01), pages 2561-2565, XP055324516, DOI: 10.1109/ICCW.2015.7247563 ISBN: 978-1-4673-6305-1**

• **DONG FANG ET AL: "Lattice Partition Multiple Access: A New Method of Downlink Non-orthogonal Multiuser Transmissions", ARXIV.ORG, CORNELL UNIVERSITY LIBRARY, 201 OLIN LIBRARY CORNELL UNIVERSITY ITHACA, NY 14853, 18 April 2016 (2016-04-18), XP080696221,**

• **KIMY BEOMJU ET AL: "Non-orthogonal Multiple Access in a Downlink Multiuser Beamforming System", MILCOM 2013 - 2013 IEEE MILITARY COMMUNICATIONS CONFERENCE, IEEE, 18 November 2013 (2013-11-18), pages 1278-1283, XP032563628, DOI: 10.1109/MILCOM.2013.218 [retrieved on 2014-02-07]**

• **CHOI JINHO: "Minimum Power Multicast Beamforming With Superposition Coding for Multiresolution Broadcast and Application to NOMA Systems", IEEE TRANSACTIONS ON COMMUNICATIONS, IEEE SERVICE CENTER, PISCATAWAY, NJ. USA, vol. 63, no. 3, 1 March 2015 (2015-03-01), pages 791-800, XP011575483, ISSN: 0090-6778, DOI: 10.1109/TCOMM.2015.2394393 [retrieved on 2015-03-13]**

• **HUANG YU-CHIH ET AL: "On decoding algorithms for construction [pi]A latt", 2015 22ND INTERNATIONAL CONFERENCE ON TELECOMMUNICATIONS (ICT), IEEE, 27 April 2015 (2015-04-27), pages 260-264, XP032785756, DOI: 10.1109/ICT.2015.7124693 [retrieved on 2015-06-16]**

**Description**

FIELD OF THE INVENTION

The field of the invention relates to downlink transmissions to multiple users and in particular to those transmitted by a network node with multiple antennas.

BACKGROUND

The 3GPP standardization effort for fifth generation (5G) networks for mobile communication targets unprecedented capacity densities of up to 25 Gbit/s/km$^2$. To this end, new multiple access technique are being developed because current 3G-4G solutions have not been designed to meet such demands.

The current fourth generation (4G) of communication systems provides a data service with transmission rates up to hundreds of Megabits (sometimes even Gigabits) per second. Although 4G may meet the requirements of broadband mobile communication applications for the next few years, the continued growth in popularity of smart terminals and the requirements of new mobile business make it difficult for 4G to meet the future demand of rate and connectivity.

Currently multiple signals from multiple users are generally transmitted using orthogonal multiple access (OMA) schemes such as frequency division multiple access (FDMA), time division multiple access (TDMA), code division multiple access (CDMA), and the orthogonal frequency division multiple access (OFDMA). These provide reasonable system-level throughput performance in packet-domain services with simple single-user detection.

However, in order to keep the orthogonality among users, OMA sacrifices spectral efficiency. To this end, to improve the spectral efficiency and meet the capacity requirement of future 5G system, the 3GPP recently initiated discussions on further evolution of LTE where the NTT DoCoMo first proposed the framework of the non-orthogonal multiple access (NOMA).

In NOMA, multiple users are multiplexed in the power-domain at the transmitter side and multi-user signal separation on the receiver side is conducted based on successive interference cancellation (SIC). Thus, users in one cell are served by a base station (BS) with the same time/code/frequency channel, and their signals are multiplexed by using different power allocation coefficients. The novelty of NOMA comes from the fact that users with poorer channel conditions are allocated more transmission power. In this way, these users are able to decode their own messages by treating others' information as noise, since the power level of their own messages is higher. On the other hand, the users with better channel conditions will use the successive interference cancellation (SIC) strategy, i.e., they first decode the messages to the users with poorer channel conditions and then decode their own by removing the other users' information. This technique requires channels that are to be paired to be selected that have very different conditions, when users experience similar channel conditions the performance degrades significantly and fairness cannot be guaranteed.

B. Kim et al., "Non-orthogonal multiple access in a downlink multiuser beamforming system," in Proc. IEEE Military Communications Conf. (MILCOM), Nov. 2013, pp. 1278-1283 discloses a novel algorithm, denoted as MIMO-NOMA, which support M=2 users per transmit antenna in the downlink. The algorithm is based on user clustering, multi-antenna zero forcing (ZF) beamforming, power allocation, and non-orthogonal multiple access (NOMA). More specifically, users that exhibit strong channel correlation, i.e., above a certain threshold, are paired, and where the pair has a high channel gain difference they are included in the same cluster and successive interference cancellation (SIC) is then employed to separate the M=2 signals superimposed on each cluster. The scheme is sensitive to the choice of the correlation threshold and where a high channel gain difference cannot be found only M=1 user per transmit antenna can be supported.

Shimei Liu et al. "User Selection and Power Schedule for Downlink Non-Orthogonal Multiple Access (NOMA) System" discloses a system in which a base station transmits information to multiple user clusters using multiple beams, each beam serving users in one user cluster simultaneously. Each user cluster consists of two users. The clusters are selected by finding semi-orthogonal users and then applying a matching algorithm for each of the selected semi-orthogonal users to match one non-selected user to each selected user.

Attention is drawn to the following references:

DON FANG ET AL.: "Lattice Partition Multiple Access: A New Method of Downlink Non-orthogonal Multiuser Transmissions" Cornell University Library, 201 OLIN LIBRARY, CORNELL UNIVERSITY, ITHACA, NY 14853, 18 April 2016.

KIMY BEOMJU ET AL.: "Non-orthogonal Multiple Access in a Downlink Multiuser Beamforming System", MILCOM 2013 IEEE MILITARY COMMUNICATIONS CONFERENCE, IEEE, 18 November 2013, pages 1278-1283.

CHOI JINHO: "Minimum Power Multicast Beamforming With Superposition Coding for Multiresolution Broadcast and Application to NOMA Systems", IEEE TRANSACTIONS ON COMMUNICATIONS, IEEE SERVICE CENTRE, v63, n3, March 2015, pages 791-800.

HUANG YU-CHIH ET AL.: "On decoding algorithms for construction $\pi$ A lattices", 2015 22nd INTERNATIONAL CONFERENCE ON TELECOMMUNICATIONS, IEEE 37 April 2015, pages 260-264.

US 2014/314006 discloses a frequency-efficient antenna operation method in a multiuser beamforming system. The method includes determining channel correlations and channel gain differences between channels using channel information received from multiple terminals, classifying the multiple terminals into at least one or more clusters using the channel correlations and channel gain differences, selecting a beamforming vector for each of the one or more clusters using the channel information of at least one or more terminals in the one or more clusters, allocating power to the terminals in each of the one or more clusters, and forming a beam based on the allocated power and the selected beamforming vector.

It would be desirable to increase the capacity of downlink transmissions from network nodes with multiple antennas.

SUMMARY

A first aspect of the present invention provides, a method according to claim 1.

The inventors of the present invention recognised that with the increasing capacity required in modern communication systems the combination of both orthogonal and non-orthogonal transmission techniques might allow the benefits of both systems to be felt and an improved capacity provided.

In this regard where a network node has multiple antennas then interference between the different beams can be reduced by transmitting orthogonal or near orthogonal signals from each antenna.

If this orthogonality is in the spatial domain, then viewed in a physical rather than mathematical manner, one can consider the applying of a precoding vector to be equivalent to beamforming, and with suitable selection of user equipment that have at least some orthogonal propagation channel characteristics, coefficients may be applied so that one beam is formed in a certain direction from one antenna and another beam may be formed in a different substantially non-overlapping direction from another antenna. Providing beams such that there is no or little overlap allows them to act for the most part as orthogonal signals with respect to each other and interference will be low. Although the use of multiple antennas in this way provides for multiple signals to be transmitted from one network node, the number of signals is limited to the number of antennas. Combining this technique with a non-orthogonal combination technique which relies on the superposition of correlated signals allows for a much increased number of user equipment that can be served.

In order for this combination of techniques to function effectively user equipment with a high degree of orthogonality with respect to each other are selected as "cluster heads" and these are then grouped with user equipment that are determined to be correlated most closely with them. In this regard the user equipment that are not selected as "cluster heads" are each grouped with a selected (cluster head) user equipment that they are most closely correlated to. This correlation is based on the same physical property as the orthogonality, such that where user equipment are considered to be orthogonal in a spatial sense they are considered to be correlated in this sense too. In this way the beamforming to transmit the beam to be received with high power at the selected user equipment will therefore be directed towards all user equipment within the group. The signals are superimposed using a technique that allows them to be separated from each other on decoding and provides a relatively fair distribution of resources between channels. In this regard, the step of superimposing the signals is done in a way that non orthogonal signals can be transmitted together and can be separated and decoded successfully. This is performed by using a structural coded modulation and superimposing the signals to form a superimposed structural code, said superimposed structural code comprising a superimposed lattice code.

The use of lattice codes in the superposition of signals, and in particular, lattice partition multiple access (LPMA) addresses many of NOMA's drawbacks that arise when users have similar channel conditions and thereby provides improved performance. A key feature of LPMA is its compatibility to most existing communication technologies. In particular, it is well adapted for combining with multiple-input multiple-output (MIMO) systems, where the spatial degrees of freedom can be exploited for a further performance improvement. We note that current multiuser MIMO systems generally only support N data streams when a base station is equipped with N antenna elements. In order to meet the massive connectivity demand and address some of the drawbacks of conventional NOMA, this technique combines MIMO and LPMA, providing MIMO-LPMA, where more than 2N data stream can be supported on one resource block (time and frequency).

In some embodiments, said step of selecting comprises analysing propagation channels between said base station and at least a subset of said multiple user equipment and selecting said plurality of user equipment which correspond to said propagation channels that are determined to have a highest degree of orthogonality with respect to each other.

The degree of propagation channel orthogonality of the different user equipment can be derived from an analysis of the characteristics of the propagation channels between the network node and the user equipment. The characteristics of the propagation channels may be derived as a set of complex coefficients that denote the attenuation of a signal and have amplitude and phase coefficients. These characteristics can be used to determine the degree of propagation channel orthogonality of the channel linking the user equipment and network node and also the degree of correlation of such user equipment or channels. In this regard orthogonality can be determined mathematically where the dot product of two vectors is zero. Thus, deriving the dot product of the complex coefficients of the channel characteristics can provide an indication of the orthogonality of the channels with respect to each other.

In order for interference between signals transmitted by each antenna to be low it is advantageous if the user equipment forming the cluster heads have a high degree of orthogonality, thus, in some embodiments the most orthogonal user equipment with respect to each other are selected. In other embodiments, there may simply be an orthogonality predetermined limit which when exceeded allows a user equipment to be selected as a cluster head and in this way user equipment may be selected based both on this and on other criteria such as priority. A drawback of this is it requires such a limit to be determined and set. In other cases priority may be dealt with by only considering a subset of user equipment that are perhaps considered as having a higher priority that are served by the network node at any particular time.

Although the step of selecting may be done in a number of ways, an efficient and effective way of selecting the user equipment comprises: selecting a first user equipment and selecting a subsequent user equipment, said subsequent user equipment being a user equipment that is determined to have a higher propagation channel orthogonality than other user equipment to said selected first user equipment; and selecting further user equipment, said further user equipment being user equipment that has an orthogonal component orthogonal to each of said selected user equipment that is higher than an orthogonal component of any other non-selected user equipment.

The first user equipment selected may be done arbitrarily or it may be done according to some predefined rule, such as selecting the user equipment with the highest quality channel to the network node or the one with the highest priority. Each group of user equipment may contain, one, two, three or more user equipment depending on the number of user equipment being served by the network node and their correlation with each other. In some cases the number in each group may be limited to a certain number to ensure a certain level of performance.

In some embodiments, said step of selecting and group forming is performed on a subset of said multiple user equipment.

Although the selecting and group forming may be performed by considering all of the user equipment served by a network node, in some cases, a subset may be selected for consideration and the user equipment not within that subset will not be selected whatever their orthogonality and correlation properties. Providing a subset in this way is one way in which priority considerations may be taken into account such that user equipment that have either high priority signals to transmit or have become high priority as they have not been selected for a while will be preferentially considered.

In some embodiments, said step of superimposing a plurality of said signals comprises: encoding each of said signals destined for said user equipment within said group using a plurality of finite field linear encoders to form a plurality of lattice code signals; weighting each of said plurality of lattice codes by multiplying said lattice code signals by respective weighting coefficients, each weighting coefficient being formed from a product of distinct primes, each weighting coefficient being formed by excluding a different one of said distinct primes from said product; and combining said plurality of weighted lattice code signals to form said superimposed signal having a lattice code construction.

It has been recognized that where encoded signals forming lattice code words are multiplied by coefficients which are formed as a product of a set of distinct primes excluding primes specific to that encoder, then they can be combined to form a lattice superposition code word which has the property due to each code layer excluding a different distinct prime and the use of the lattice code construction, of allowing the extraction of individual user equipment signals using a modular lattice operation. This allows the individual elements of a superimposed signal to be extracted in a simpler and effective manner. Thus, this technique is a particular effective technique for superimposing correlated signals and allowing their extraction. Thus, combined with the selection of user equipment and beamforming to provide orthogonality or near orthogonality of signals from different antennas, a system that provides a large number of signals that can be transmitted on a particular frequency and time resource at a same time is achieved.

In some embodiments, said step of forming said precoding vectors comprises performing zero forcing beamforming to generate precoding vectors operable to provide at least semi-orthogonal transmission signals each directed towards a different one of said groups of user equipment.

Although precoding vectors can be generated using a number of techniques which seek to reduce interference between the different signals generated, zero forcing beamforming is an effective technique that is a linear scheme with low complexity implementation and can be used to control the amount of interference across the different groups. Such a beamforming technique when combined with the selection of orthogonal or near orthogonal user equipment provides a way of generating at least semi-orthogonal transmission signals with low mutual interference from the antenna of the network node.

In some embodiments, said method comprises transmitting multiple streams of signals to at least one of said user equipment within a group, said multiple streams being transmitted as a plurality of superimposed signals by said corresponding antenna.

Although the superposition of signals is generally used to transmit signals to different user equipment using the same time and frequency resource, in some cases, multiple signals to a same user equipment may be superimposed allowing more signals to be sent to that user equipment within a particular time and frequency resource. This may be particularly applicable where there are a low number of user equipment in one group or where there is a single user equipment in a group. In this way the properties of the system are used to increase the capacity of signals that can be transmitted to that user equipment.

A second aspect of the present invention provides, a computer program which when executed by a processor is operable to control said processor to perform a method according to a first aspect of the present invention.

A third aspect of the present invention provides a network node according to independent claim 10.

In some embodiments said encoding circuitry is configured to encode each of said signals destined for said user equipment within said group using a plurality of finite field linear encoders to form a plurality of lattice code signals, to weight each of said plurality of lattice codes by multiplying said lattice code signals by respective weighting coefficients, each weighting coefficient being formed from a product of distinct primes, each weighting coefficient being formed by excluding a different one of said distinct primes from said product; and to combine said plurality of weighted lattice code signals to form said superimposed signal having a lattice code construction.

In some embodiments said transmission circuitry it operable to transmit multiple streams of signals to at least one of said user equipment within a group, said multiple streams being transmitted as a plurality of superimposed signals.

In some embodiments, said beamforming circuitry is operable to perform zero forcing beamforming to generate precoding vectors for providing orthogonal transmission signals each directed towards a different one of said groups of user equipment.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

BRIEF DESCRIPTION OF THE DRAWINGS

Embodiments of the present invention will now be described further, with reference to the accompanying drawings, in which:

Figure 1 illustrates a flow chart showing an embodiment;
Figure 2 shows a user selection algorithm according to an embodiment;
Figure 3 shows user selection and zero forcing beamforming according to an embodiment;
Figure 4 schematically shows LPMA encoding and decoding;
Figure 5 and 6 schematically shows simulated cumulative density function CDF of the per-antenna rate under the proposed scheme and under the scheme in Kim for different superposition constellations; and
Figure 7 shows a flow diagram illustrating steps in a method according to an embodiment.

DESCRIPTION OF THE EMBODIMENTS

Before discussing the embodiments in any more detail, first an overview will be provided.

Embodiments seek to provide multi user downlink transmissions which use both orthogonal and non-orthogonal techniques. In particular, orthogonal or semi-orthogonal beams are generated to transmit signals from multiple antenna at a base station, each signal being transmitted to a group of user equipment. User equipment with orthogonal or semi-orthogonal channel propagation characteristics are selected as "cluster heads" and user equipment are grouped with particular cluster heads according to their correlation. In this regard, groups are comprised of user equipment with highly correlated propagation channel characteristics. Generally, a group comprises multiple user equipment, but in some cases it may comprise a single user equipment and this single user may receive a single signal or it may receive multiple streams of signals that are superimposed upon each other.

The groups of user equipment receive multiple signals directed to the user equipment within the group as superimposed signals on a beam that is orthogonal or semi-orthogonal to beams transmitted to other user equipment. The individual signals are superimposed using a non-orthogonal multiple access technique. In preferred cases, lattice partitioning multiple access LPMA is used and this uses the properties of lattice codes to superimpose the signals. By allowing multiple user equipment to be served by each antenna in one time and frequency resource the number of signals that can be transmitted by N antennas is increased from N, to N times the number users in a group.

Thus, if each group had M users there would be N.M users served. In this regard, groups may have different numbers of users depending on circumstances and in particular, the number of user equipment that are closely correlated with each other.

The interference between beams may be reduced by using some beamforming techniques such as zero forcing beamforming which uses precoded vectors that are applied to the signals to be transmitted and provides for low interference between these different beams. This is particularly effective when transmitting beams to groups of user equipment that are selected to be highly orthogonal with respect to each other.

Embodiments provide a new approach to non-orthogonal multiuser downlink transmission, referred to as multiple-input multiple-output lattice partition multiple access (MIMO-LPMA). The proposed approach uses N transmit antennas to deliver information to N clusters of M users each, thus accommodating a total of N·M users in a non-orthogonal fashion.

A method for MIMO-based non-orthogonal downlink multiuser transmission is provided, in which it is proposed to:

- Assign a first user to each cluster (in the following denoted as the "cluster head") according to a semi-orthogonality criterion, i.e., for a given cluster, the user whose channel has the strongest component orthogonal to the other cluster heads is selected.

- For each cluster, choose the remaining M-1 users according to a correlation criterion, i.e., choose those users whose channels are the most correlated to the one of their cluster head.

- Adopt a beamforming strategy such as zero forcing beamforming, and use the N antennas to form N orthogonal or near orthogonal transmission beams, one per cluster. On each beam, transmit the M signals intended for the M users in that cluster.

- Exploit the capability of a superposition scheme such as LPMA to allow multi-stream downlink non-orthogonal transmission, so that an N-antenna BS can support more than 2N users per resource block.

The proposed approach provides multiple advantages:

- The semi-orthogonality criterion means that users lying in different clusters experience highly uncorrelated channels. It also improves the performance of any beamforming by reducing the noise enhancement phenomenon and in turn increases the spectral efficiency.
- The correlation criterion ensures that all M users in each cluster are aligned to some degree with their respective transmission beam. Moreover, this approach can be applied to M>2 users per cluster, and it does not require the optimization of a correlation threshold.
- Beamforming such as zero forcing beamforming controls the inter-cluster crosstalk, meaning that beams transmitted to different clusters have reduced interference with one another. When combined with the two above criteria, the beamforming controls the total amount of interference received by each user.
- Superposition schemes such as LPMA allows the M signals superimposed on each beam to be separated. Unlike conventional successive interference cancellation, LPMA does not require a significant gain difference between the various signals received in each cluster, and in some embodiments it avoids the complexity of a power allocation phase.

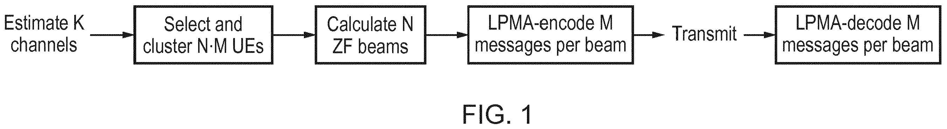

In some embodiments a technique based on user selection, beamforming, and LPMA encoding/decoding is provided. Figure 1 shows this technique as a general flow chart. In the following, a detailed description will be provided for each of these building blocks.

### *System Model*

Consider multi-user MISO (multiple input single output) downlink, where the transmitting base station (BS) is equipped with $N$ antennas, and $K$ is the total number of single-antenna users (UEs) in a cell. Let $N \cdot M$ be the number of UEs schedulable for simultaneous transmission, which are divided into $N$ groups or clusters, each containing $M \geq 2$ users. It is worth noting that if $K < N \cdot M$, i.e., the total number of UEs is less than the number of schedulable UEs, the proposed design can form single-UE clusters, where the single UEs are assigned multiple streams each and therefore achieve a higher throughput.

$h_{n,m}$ denotes the complex channel vector between the transmitter and the moth user in the $n$-th cluster. Information of the channels is available at the transmitter and can be acquired through orthogonal uplink pilot symbols (for time-division-duplex (TDD) systems) or through downlink pilot symbols followed by uplink channel feedback (for frequency-division-duplex (FDD) systems).

## *User Selection*

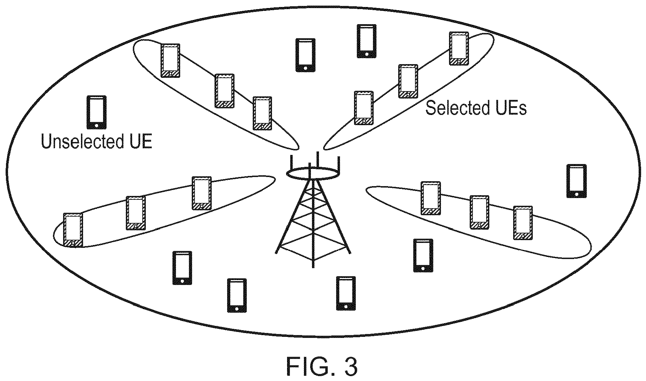

The proposed user selection algorithm chooses $N \cdot M$ users out of the $K$ available ones, and groups them into $N$ clusters of $M$ users each. Figure 3 provides an example for the case of $K = 20$ available (hashed and black) UEs, $N = 4$ transmit antennas and clusters, and $M = 3$ selected (hashed) UEs per cluster. The user selection algorithm ensures two conditions: (i) that users within the same cluster experience highly correlated channels, and (ii) that users lying in different clusters experience highly uncorrelated channels. This is generally done by selecting the most orthogonal users as cluster heads, although any set of user equipment that have relatively high orthogonality would be suitable for selection as cluster heads.

The grouping of user equipment that are highly correlated means that all users within a *j*-th cluster receive a strong component of the signal beam intended for that cluster. The orthogonality criterion aims at reducing the inter-cluster interference when combined with precoding. It should be noted that (ii) improves the performance of beamforming such as zero forcing beamforming with respect to the case when inter-cluster channel correlation is not controlled.

More specifically, the proposed user selection algorithm consists of two phases. In the first phase, one user is selected for each of the N clusters, ensuring that the channels $\mathbf{h}_{n,1}$, $n = 1,..., N$, of these users, denoted as the "cluster heads", have significant orthogonal components. In the second phase of the proposed user selection algorithm, $M - 1$ additional users are selected for each cluster, such that all channels $\mathbf{h}_{n,m}$, $m = 1,...,M$, of users that lie in the same n-th cluster are highly correlated. The two phases of the proposed user selection algorithm are provided below.

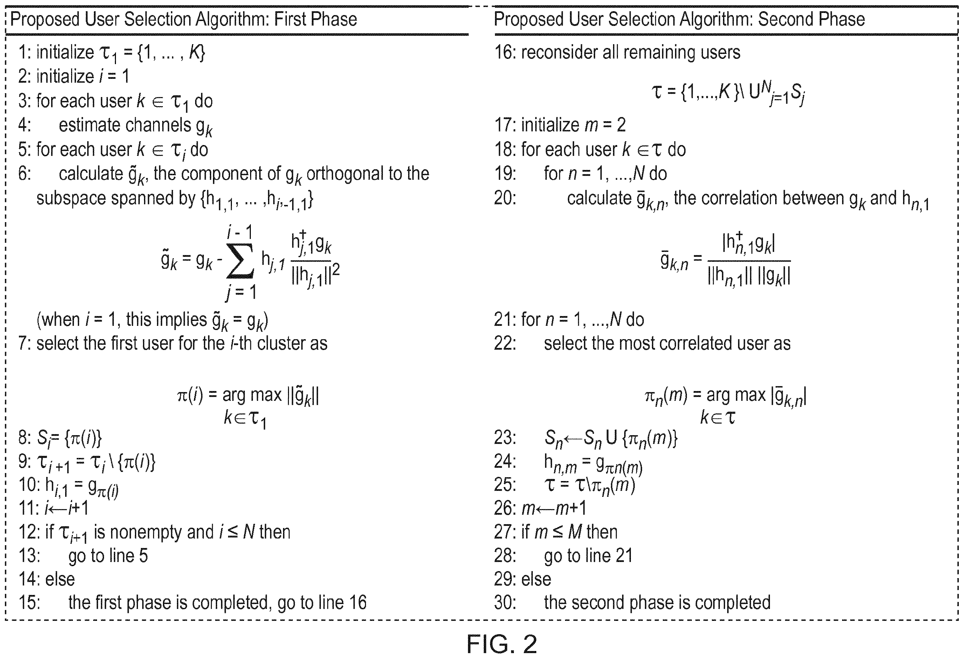

In the algorithm set out in Figure 2 there is a proposed user selection algorithm which looks at user's propagation channels and selects user equipment with the most orthogonal channels. The degree of correlation between non-selected user equipment and the selected user equipment is then determined and the user equipment is accordingly grouped. In this case a subset of the user equipment are served and these are user equipment that are highly correlated with the user equipment that are selected as being orthogonal to each other. Transmission may occur at different frequencies where different user equipment are selected. In some cases there is priority given to certain user equipment such that a subset of higher priority user equipment are considered when determining the most orthogonal and the most correlated.

Figure 3 schematically shows user selection and Zero Forcing beamforming according to an embodiment. In the example: K=20, N=4, and M=3. As is shown schematically in this figure the beams are directed towards a group of user equipment which are arranged spatially in the same direction with respect to the base station and in a different direction to the other beams. In this way there is little or no interference between the beams. Although this is shown schematically as beams focused in certain directions in a real situation propagation of the beams depends not only on their direction of travel but also on obstacles that cause reflection and interference. The propagation channel information provides data regarding this and allows precoding vectors to be determined which can be applied to transmitted signals and provide beams which are mathematically orthogonal or semi-orthogonal with respect to each other.

## *Zero Forcing (ZF) Beam ,forming*

After UEs have been selected and clustered by the user selection algorithm, the base station (BS) adopts some form of beamforming, in this embodiment ZF beamforming is used for the simultaneous transmission of signals to different clusters. Zero forcing beamforming is of particular interest because it is a linear scheme with low-complexity implementation, and because it can control the amount of interference across clusters. In this scheme, the BS stacks up the N channels to the selected cluster heads in the following matrix

$$\mathbf{H} = \left[ \mathbf{h}_{1,1}^{T}, \ldots, \mathbf{h}_{N,1}^{T} \right]$$

and calculates the beamforming or precoding vectors $\mathbf{w}_n$, $n = 1,..., N$, as follows

$$w_n = \frac{1}{\sqrt{\gamma}} \mathbf{h}_{n,1}^{\dagger} \left( \mathbf{HH}^{\dagger} \right)^{-1}$$

where $(.)^T$ denotes transpose and, $(.)^{\dagger}$ denotes conjugate transpose, and $\gamma = \mathrm{tr}\{\mathbf{H}^{\dagger}\mathbf{HH}^{\dagger})^{-2}\}$ is a power normalization constant. We note that under ZF beamforming the following condition holds $\mathbf{h}_{n,1}\mathbf{w}_j = 0 \ \forall j \neq n$, therefore the cluster heads will not in ideal conditions receive any inter-cluster interference. However, all the remaining users in each cluster will receive inter-cluster interference, since $\mathbf{h}_{n,m}\mathbf{w}_j \neq 0$ if $m \neq 1$,

and this interference will be dealt with by the decoder which in this example is an LPMA decoder.

*LPMA **Encoding** and Decoding*

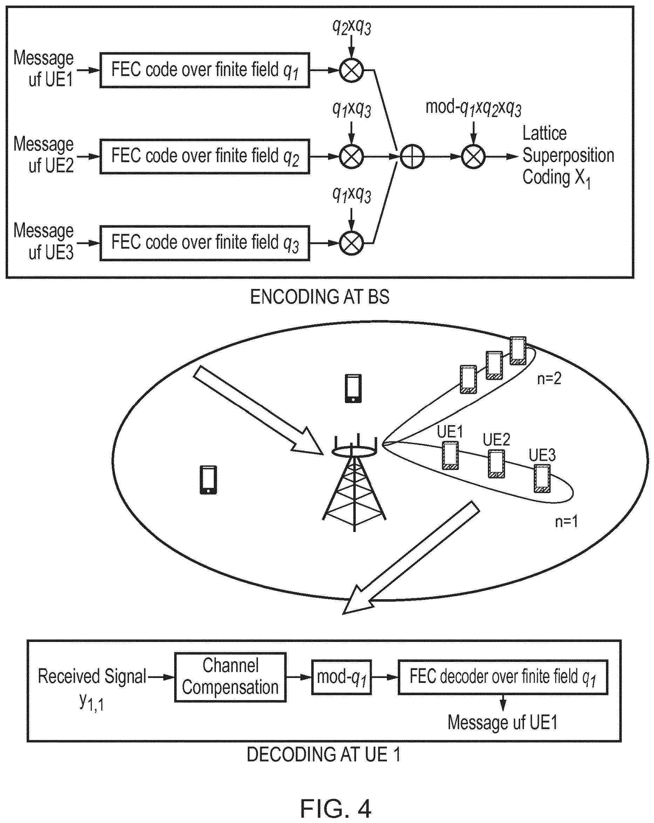

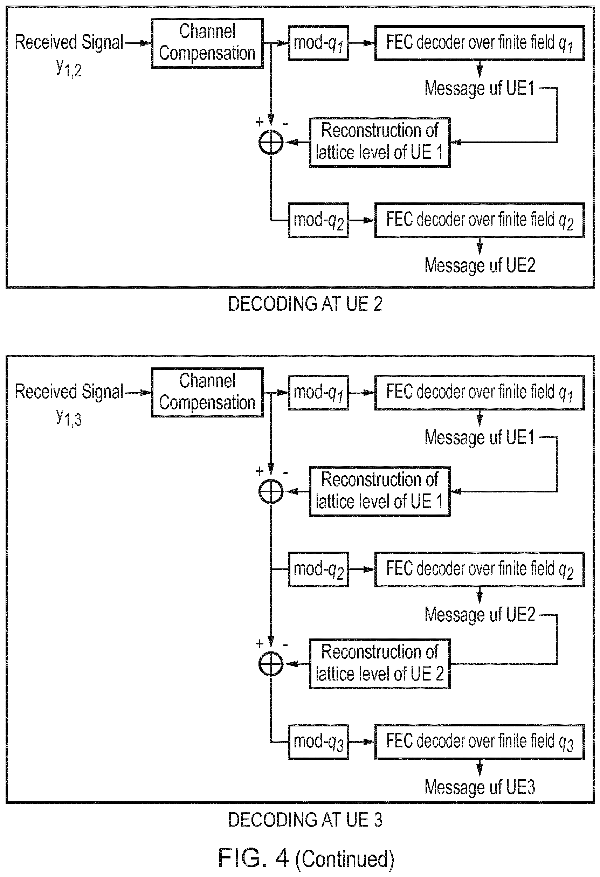

Once the ZF beamforming vector $\mathbf{w}_n$ has been calculated for the n-th cluster, the BS encodes the *M* messages intended for the UEs in the n-th cluster according to the LPMA scheme shown in Figure 4 (top box - "ENCODING AT BS"). The BS thus obtains the signal $x_n$, which will be transmitted on the beam $\mathbf{w}_n$. The same operation is performed for all *N* clusters, and the aggregate signal is transmitted, resulting in the following received signal $y_{n,m}$ at the m-th UE of the n-th cluster

$$y_{n,m} = \mathbf{h}_{n,m}^T \mathbf{w}_n x_n + \mathbf{h}_{n,m}^T \sum_{j \neq n} \mathbf{w}_j x_j + v_{n,m}$$

where the three terms on the right hand side represent: useful signal, inter-cluster crosstalk, and thermal noise, respectively. The useful signal contains all M messages intended for the UEs in the n-th cluster.

Two points should be noted: (i) the inter-cluster crosstalk power is controlled by selection of orthogonal or near orthogonal cluster heads and by means of the ZF beamformer, and (ii) the M messages can be separated via LPMA decoding. This latter is shown in Figure 4 (bottom boxes - "DECODING AT UE"). Each UE can therefore recover its own message.

Figure 4 schematically shows LPMA encoding and decoding, where in this example: M=3 UEs per cluster. In this embodiment, the linear encoders for encoding messages from each UE within a cluster, are FEC encoders such as turbo encoders which generate codewords over a finite field. Each codeword is a vector of a certain size the elements of the vector coming from a value set which is determined from the size of the finite field. The value set may be a set of integers, Gaussian integers or Eisenstien integers. The size of this finite field provides the lattice partition operation and determines the distinct prime for each codeword which in turn can be used to determine the weighting coefficient which is formed as a product of the distinct primes excluding the prime of that encoder.

At the decoding side, UE1 is the UE that receives the signal via the weakest channel and as such has the largest weighting coefficient. Initially UE1 performs channel compensation to compensate for losses occurring due to the channel which it determines based on received pilot signals, and then it extracts the signal destined for itself from the combined signal based on a modulo lattice operation and decodes it.

UE2 has the next largest weighting coefficient and following channel compensation it will decode the signal with the largest weighting coefficient (destined for UE1) and will reconstruct the weighted lattice code signal from this decoded signal from which errors have been removed or at least reduced and it will then subtract this signal from the total signal, so that the combined signal is now the combined signals to UE2 and UE3 and UE2 is the UE with the largest weighting coefficient. This signal is then extracted using a modulo lattice operation based on its weighting coefficient and it is decoded to generate the desired signal.

UE3 is the UE with the strongest channel and will decode and reconstruct signals to UE1 and UE2 before extracting and decoding its own signal. Thus, for later UEs the latency will be higher, although the complexity will be the same as for the other UEs. In other embodiments each UE may simply extract its own signal by using the appropriate modulo lattice operation. This can be viewed as the operations all being performed in parallel which reduces the latency for each UE, although the quality of the decoded signal particularly at the UEs with the stronger channels will be lower than is the case in the system shown here. In some cases a combination of the two parallel and serial systems may be used.

***Performance***

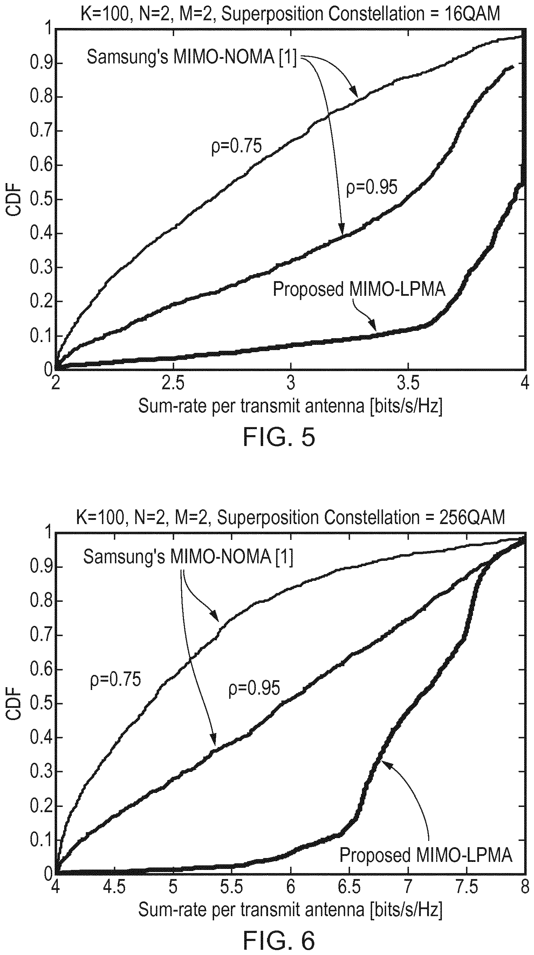

Figures 5 and 6 schematically show simulated cumulative density function CDF of the per-antenna rate under the proposed scheme and under the scheme disclosed in Kim et al. cited in the introduction, for N=2 transmit antennas, M=2 users per cluster, and a total of K=100 users in the system. For MIMO-NOMA, correlation thresholds equal to $\rho$=0.75 and $\rho$=0.95 are used, as suggested in Kim. In the two figures, different constellations are considered, namely 16QAM and 256QAM, respectively. In both cases, the proposed scheme outperforms the best existing solution in Kim across the whole rate region. In particular, for the 5% worst rate (bottom-left region of the curves), the proposed scheme can achieve a rate gain of 40% and above.

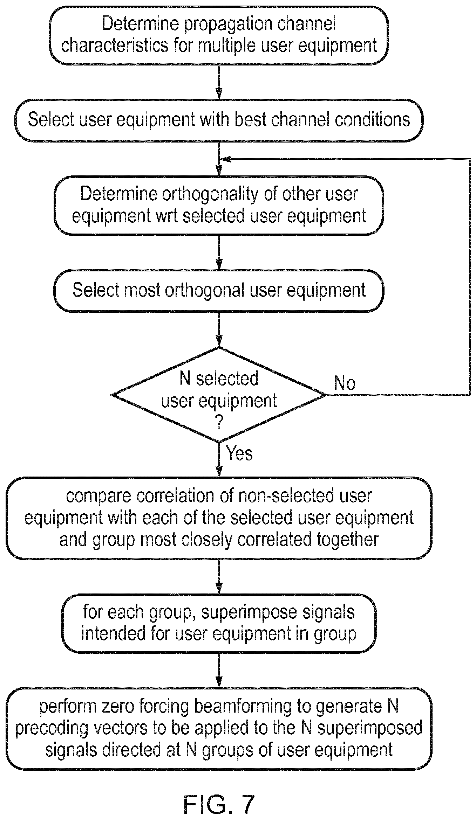

Figure 7 schematically shows a flow diagram illustrating steps formed in a method according to an embodiment. Initially the propagation channel characteristics of the multiple user equipment are determined. This is done in a conventional way being acquired from orthogonal uplink pilot symbols, for example, or from uplink channel feedback from the user equipment.

An initial user equipment is then selected and in this case the user equipment with the best channel conditions is selected. In some cases it may be the user equipment with the highest priority or there may be some other selection criterion.

The channel propagation orthogonality of the other user equipment with respect to this selected equipment is then determined and the most orthogonal user equipment is selected.

The orthogonality of other user equipment with respect to both of the selected user equipment is then determined and the most orthogonal user equipment to both of these user equipment is then selected and this is repeated until N user equipment have been selected, N being the number of antenna of the base station. In this regard, in some cases fewer than N user equipment may be selected where there are not many user equipment currently within the cell served by the base station. More than N user equipment should not be selected.

Once the N most orthogonal user equipment have been selected, correlation of non-selected user equipment with each of the selected user equipment is then determined and the most closely correlated user equipment are grouped together to form groups of user equipment. In this regard, the size of the group may be restricted depending on performance requirements such that in some cases there may be a maximum size of the group. In some cases, some of the selected orthogonal user equipment may not have any user equipment that are closely correlated to them and in this case, they may form a group of one user equipment. In such a case, they may have just one stream of signals transmitted to them or in some cases transmissions to that user equipment may be formed as multiple streams of signals these multiple streams forming superimposed signals and being transmitted together as a superimposed signal in much the same way that signals to multiple user equipment are transmitted as explained below.

Once the N most orthogonal user equipment have been selected and groups of user equipment correlated with them have been formed, then for each group the signals intended for the user equipment group are superimposed using a non-orthogonal multiple access technique such as LPMA lattice partition multiple access.

This technique generates the superimposed signals from the encoded individual signals which signal can be separated into its individual components when decoded at the user equipment.

Zero forcing beamforming is then performed to generate N precoding vectors and these are applied to these N superimposed signals which are directed at the N groups of user equipment. Each of the N antenna then transmit a separate one of these signals.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its scope as set out in the appended claims. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions.

**Claims**

1.  A method of controlling signal transmission from a network node towards multiple user equipment, said network node comprising a plurality of antennas, said method comprising:

    selecting a plurality of said user equipment, said selected user equipment being user equipment that are determined to have a high degree of propagation channel orthogonality with respect to each other, the number of said selected plurality of user equipment being less than or equal to the number of said plurality of antennas;
    for at least some non-selected user equipment, determining a respective propagation channel correlation between (i) the non-selected user equipment, and (ii) each of said selected user equipment;
    grouping respective selected user equipment with a non-selected user equipment with which the respective selected user equipment has the highest degree of propagation channel correlation, thereby forming a plurality of groups of user equipment;
    forming a precoding vector for each of said plurality of groups of user equipment; and
    for each group of user equipment, superimposing signals intended for said user equipment within said group, applying said corresponding precoding vector to said superimposed signals and transmitting a resultant signal from one of said antenna towards said group of user equipment; wherein

    said step of superimposing said signals for each group of user equipment comprises encoding each of said signals and mapping each of said encoded signals to a structural coded modulation and superimposing said signals to form a superimposed structural code, wherein said superimposed structural code comprises a superimposed lattice code.

2.  A method according to claim 1, wherein said step of selecting comprises:
    analysing propagation channels between said base station and at least a subset of said multiple user equipment and selecting said plurality of user equipment which correspond to said propagation channels that are determined to have a highest degree of orthogonality with respect to each other.

3.  A method according to any preceding claim, wherein said step of selecting comprises:

    selecting a first user equipment and selecting a subsequent user equipment, said subsequent user equipment being a user equipment that is determined to have a higher propagation channel orthogonality than other user equipment with respect to said selected first user equipment; and
    selecting further user equipment, said further user equipment being user equipment that has an orthogonal component orthogonal to each of said selected user equipment that is higher than the orthogonal component of any other non-selected user equipment.

4.  A method according to claim 1, wherein said step of selecting and group forming is performed on a subset of said multiple user equipment.

5.  A method according to any preceding claim, wherein said step of superimposing a plurality of said signals comprises:

    encoding each of said signals destined for said user equipment within said group using a plurality of finite field linear encoders to form a plurality of lattice code signals;
    weighting each of said plurality of lattice codes by multiplying said lattice code signals by respective weighting coefficients, each weighting coefficient being formed from a product of distinct primes, each weighting coefficient being formed by excluding a different one of said distinct primes from said product; and
    combining said plurality of weighted lattice code signals to form said superimposed signal having a lattice code construction.

6.  A method according to any preceding claim, wherein said step of forming said precoding vectors comprises performing zero forcing beamforming to generate precoding vectors operable to provide at least semi-orthogonal transmission signals each directed towards a different one of said groups of user equipment.

7.  A method according to any preceding claim, said method comprising transmitting multiple streams of signals to at least one of said user equipment within a group from said plurality of groups of user equipment, said multiple streams being transmitted as a plurality of superimposed signals by said corresponding antenna.

8.  A method according to claim 7, wherein said group comprising said at least one user equipment contains one single user equipment.

9. A computer program which when executed by a processor is operable to control said processor to perform a method according to any one of claims 1 to 8.

10. A network node, said network node comprising:

a plurality of antennas;
propagation channel quality determining circuitry for determining channel characteristics indicative of a degree of orthogonality and a degree of correlation of a plurality of user equipment with respect to each other;
selection circuitry operable to select a plurality of said user equipment that are determined to have a high degree of orthogonality with respect to each other, a number of said selected plurality of user equipment being less than or equal to a number of said plurality of antennas;
determination circuitry operable to determine a respective propagation channel correlation between (i) the non-selected user equipment, and (ii) each of said selected user equipment;
grouping circuitry operable to group respective selected user equipment with a non-selected user equipment with which the respective selected user equipment has the highest degree of propagation channel correlation, thereby forming a plurality of groups of user equipment; beamforming circuitry operable to form a precoding vector for each of said plurality of groups of user equipment; and
transmission circuitry operable for each group of user equipment to superimpose signals intended for said user equipment within said group, to apply said corresponding precoding vector to said superimposed signals and to transmit a resultant signal from one of said antenna;

wherein said transmission circuitry comprises encoding circuitry configured to encode each of said signals intended for said user equipment within said group and to map each of said encoded signals to a structural coded modulation and to superimpose said signals to form a superimposed structural code, said superimposed structural code comprising a superimposed lattice code.

11. A network node according to any one of claims 10, wherein said beamforming circuitry is operable to perform zero forcing beamforming to generate precoding vectors for providing at least semi-orthogonal transmission signals each directed towards a different one of said groups of user equipment.

**Patentansprüche**

1. Verfahren zum Steuern einer Signalübertragung von einem Netzwerkknoten zu mehreren Teilnehmereinrichtungen, wobei der Netzwerkknoten eine Vielzahl von Antennen umfasst, wobei das Verfahren Folgendes umfasst:

Auswählen einer Vielzahl der Teilnehmereinrichtungen, wobei die ausgewählten Teilnehmereinrichtungen Teilnehmereinrichtungen sind, von denen bestimmt wird, dass sie einen hohen Grad der Ausbreitungskanalorthogonalität mit Bezug aufeinander aufweisen, wobei die Anzahl der ausgewählten Vielzahl von Teilnehmereinrichtungen kleiner als oder gleich der Anzahl der Vielzahl von Antennen ist;
Bestimmen einer jeweiligen Ausbreitungskanalkorrelation zwischen (i) den nicht ausgewählten Teilnehmereinrichtungen und (ii) jeder der ausgewählten Teilnehmereinrichtungen für mindestens einige nicht ausgewählte Teilnehmereinrichtungen;
Gruppieren von jeweiligen ausgewählten Teilnehmereinrichtungen mit einer nicht ausgewählten Teilnehmereinrichtung, mit der die jeweiligen ausgewählten Teilnehmereinrichtungen den höchsten Grad der Ausbreitungskanalkorrelation hat, dadurch Bilden einer Vielzahl von Gruppen von Teilnehmereinrichtungen;
Bilden eines Vorcodierungsvektors für jede der Vielzahl von Gruppen von Teilnehmereinrichtungen; und
für jede Gruppe von Teilnehmereinrichtungen Überlagern von Signalen, die für die Teilnehmereinrichtungen in der Gruppe bestimmt sind, Anwenden des entsprechenden Vorcodierungsvektors auf die überlagerten Signale und Übertragen eines resultierenden Signals von einer der Antennen zu der Gruppe von Teilnehmereinrichtungen; wobei
der Schritt des Überlagerns der Signale für jede Gruppe von Teilnehmereinrichtungen das Codieren von jedem der Signale und das Zuordnen von jedem der codierten Signale zu einer strukturcodierten Modulation und das Überlagern der Signale zum Bilden eines überlagerten Strukturcodes umfasst, wobei der überlagerte Strukturcode einen überlagerten Gittercode umfasst.

**2.** Verfahren nach Anspruch 1, wobei der Schritt des Auswählens Folgendes umfasst:
Analysieren von Ausbreitungskanälen zwischen der Basisstation und mindestens einem Untersatz der mehreren Teilnehmereinrichtungen und Auswählen der Vielzahl von Teilnehmereinrichtungen, die den Ausbreitungskanälen entsprechen und von denen bestimmt wird, dass sie einen höchsten Grad der Orthogonalität mit Bezug aufeinander haben.

**3.** Verfahren nach einem der vorhergehenden Ansprüche, wobei der Schritt des Auswählens Folgendes umfasst:

Auswählen einer ersten Teilnehmereinrichtung und Auswählen einer folgenden Teilnehmereinrichtung, wobei die folgende Teilnehmereinrichtung eine Teilnehmereinrichtung ist, von der bestimmt wird, dass sie mit Bezug auf die ausgewählte erste Teilnehmereinrichtung eine höhere Ausbreitungskanalorthogonalität als andere Teilnehmereinrichtungen hat; und
Auswählen von weiteren Teilnehmereinrichtungen, wobei die weiteren Teilnehmereinrichtungen Teilnehmereinrichtungen sind, die eine orthogonale Komponente orthogonal zu jeder der ausgewählten Teilnehmereinrichtungen aufweisen, die höher ist als die orthogonale Komponente von anderen nicht ausgewählten Teilnehmereinrichtungen.

**4.** Verfahren nach Anspruch 1, wobei der Schritt des Auswählens und der Gruppenbildung an einem Untersatz der mehreren Teilnehmereinrichtungen durchgeführt wird.

**5.** Verfahren nach einem der vorhergehenden Ansprüche, wobei der Schritt des Überlagerns einer Vielzahl der Signale Folgendes umfasst:

Codieren von jedem der Signale, die für die Teilnehmereinrichtungen in der Gruppe vorgesehen sind, unter Verwendung einer Vielzahl von Galoiskörperlinearcodierern, um eine Vielzahl von Gittercodesignalen zu bilden; Gewichten von jedem der Vielzahl von Gittercodes durch Multiplizieren der Gittercodesignale mit jeweiligen Gewichtungskoeffizienten, wobei jeder Gewichtungskoeffizient aus einem Produkt von eindeutigen Primzahlen gebildet wird, wobei jeder Gewichtungskoeffizient durch Ausschließen einer anderen der eindeutigen Primzahlen aus dem Produkt gebildet wird; und
Kombinieren der Vielzahl von gewichteten Gittercodesignalen, um das überlagerte Signal mit einer Gittercodekonstruktion zu bilden.

**6.** Verfahren nach einem der vorhergehenden Ansprüche, wobei der Schritt des Bildens der Vorcodierungsvektoren das Durchführen einer Nullerzwingungsstrahlformung, um Vorcodierungsvektors zu erzeugen, die betreibbar sind, mindestens halborthogonale Übertragungssignale bereitzustellen, von denen jedes auf eine andere der Gruppen von Teilnehmereinrichtungen gerichtet ist, umfasst.

**7.** Verfahren nach einem der vorhergehenden Ansprüche, wobei das Verfahren das Übertragen von mehreren Strömen von Signalen zu mindestens einer der Teilnehmereinrichtungen in einer Gruppe der Vielzahl von Gruppen von Teilnehmereinrichtungen umfasst, wobei die mehreren Ströme als eine Vielzahl von überlagerten Signalen durch die entsprechende Antenne übertragen werden.

**8.** Verfahren nach Anspruch 7, wobei die Gruppe, die die mindestens eine Teilnehmereinrichtung umfasst, eine einzelne Teilnehmereinrichtung enthält.

**9.** Computerprogramm, das, wenn es von einem Prozessor ausgeführt wird, betreibbar ist, den Prozessor zum Durchführen eines Verfahrens nach einem der Ansprüche 1 bis 8 zu steuern.

**10.** Netzwerkknoten, wobei der Netzwerkknoten Folgendes umfasst:

eine Vielzahl von Antennen;
eine Ausbreitungskanalqualitätsbestimmungsschaltung zum Bestimmen von Kanaleigenschaften, die einen Grad der Orthogonalität und einen Grad der Korrelation einer Vielzahl von Teilnehmereinrichtungen mit Bezug aufeinander anzeigen;
eine Auswahlschaltung, die betreibbar ist, eine Vielzahl der Teilnehmereinrichtungen, von denen bestimmt wird, dass sie einen hohen Grad der Orthogonalität mit Bezug aufeinander aufweisen, auszuwählen, wobei eine Anzahl der ausgewählten Vielzahl von Teilnehmereinrichtungen kleiner als oder gleich einer Anzahl der Vielzahl von Antennen ist;

eine Bestimmungsschaltung, die betreibbar ist, eine jeweilige Ausbreitungskanalkorrelation zwischen (i) den nicht ausgewählten Teilnehmereinrichtungen und (ii) jeder der ausgewählten Teilnehmereinrichtungen zu bestimmen;

eine Gruppierungsschaltung, die betreibbar ist, jeweilige ausgewählte Teilnehmereinrichtungen mit einer nicht ausgewählten Teilnehmereinrichtung, mit der die jeweiligen ausgewählten Teilnehmereinrichtungen den höchsten Grad der Ausbreitungskanalkorrelation hat, zu gruppieren, dadurch Bilden einer Vielzahl von Gruppen von Teilnehmereinrichtungen;

eine Strahlformungsschaltung, die betreibbar ist, für jede der Vielzahl von Gruppen von Teilnehmereinrichtungen einen Vorcodierungsvektor zu bilden; und

eine Übertragungsschaltung, die betreibbar ist, für jede Gruppe von Teilnehmereinrichtungen Signale zu überlagern, die für die Teilnehmereinrichtungen in der Gruppe bestimmt sind, den entsprechenden Vorcodierungsvektor auf die überlagerten Signale anzuwenden und ein resultierendes Signal von einer der Antennen zu übertragen;

wobei die Übertragungsschaltung eine Codierungsschaltung umfasst, die dazu ausgelegt ist, jedes der Signale, das für die Teilnehmereinrichtungen in der Gruppe bestimmt ist, zu codieren und jedes der codierten Signale einer strukturcodierten Modulation zuzuordnen und die Signale zu überlagern, um einen überlagerten Strukturcode zu bilden, wobei der überlagerte Strukturcode einen überlagerten Gittercode umfasst.

11. Netzwerkknoten nach einem der Ansprüche 10, wobei die Strahlformungsschaltung betreibbar ist, eine Nullerzwingungsstrahlformung durchzuführen, um Vorcodierungsvektoren zu erzeugen, um mindestens halborthogonale Übertragungssignale bereitzustellen, von denen jedes auf eine andere der Gruppen von Teilnehmereinrichtungen gerichtet ist.

## Revendications

1. Procédé de commande d'émission de signal, d'un nœud de réseau vers de multiples équipements utilisateur, ledit nœud de réseau comprenant une pluralité d'antennes, ledit procédé comprenant :

la sélection d'une pluralité desdits équipements utilisateur, lesdits équipements utilisateur sélectionnés étant des équipements utilisateur qui sont déterminés comme ayant un degré élevé d'orthogonalité de canal de propagation les uns par rapport aux autres, le nombre de ladite pluralité sélectionnée d'équipements utilisateur étant inférieur ou égal au nombre de ladite pluralité d'antennes ;

pour au moins certains équipements utilisateur non sélectionnés, la détermination d'une corrélation de canal de propagation respective entre (i) les équipements utilisateur non sélectionnés, et (ii) chacun desdits équipements utilisateur sélectionnés ;

le regroupement d'un équipement utilisateur sélectionné respectif avec un équipement utilisateur non sélectionné avec lequel l'équipement utilisateur sélectionné respectif possède le degré le plus élevé de corrélation de canal de propagation, en formant ainsi une pluralité de groupes d'équipements utilisateur ;

la formation d'un vecteur de précodage pour chacun de ladite pluralité de groupes d'équipements utilisateur ; et

pour chaque groupe d'équipements utilisateur, la superposition de signaux destinés auxdits équipements utilisateur au sein dudit groupe, l'application dudit vecteur de précodage correspondant auxdits signaux superposés et l'émission d'un signal résultant, de l'une desdites antennes vers ledit groupe d'équipements utilisateur ; dans lequel

ladite étape de superposition desdits signaux pour chaque groupe d'équipements utilisateur comprend le codage de chacun desdits signaux et la mise en correspondance de chacun desdits signaux codés avec une modulation codée structurale et la superposition desdits signaux pour former un code structural superposé, dans lequel ledit code structural superposé comprend un code de maille superposé.

2. Procédé selon la revendication 1, dans lequel ladite étape de sélection comprend :
l'analyse de canaux de propagation entre ladite station de base et au moins un sous-ensemble desdits multiples équipements utilisateur et la sélection de ladite pluralité d'équipements utilisateur qui correspondent auxdits canaux de propagation qui sont déterminés comme ayant un degré le plus élevé d'orthogonalité les uns par rapport aux autres.

3. Procédé selon une quelconque revendication précédente, dans lequel ladite étape de sélection comprend :

la sélection d'un premier équipement utilisateur et la sélection d'un équipement utilisateur suivant, ledit équipement utilisateur suivant étant un équipement utilisateur qui est déterminé comme ayant une orthogonalité de canal de propagation plus élevée que d'autres équipements utilisateur par rapport audit premier équipement utilisateur sélectionné ; et
la sélection d'un équipement utilisateur supplémentaire, ledit équipement utilisateur supplémentaire étant un équipement utilisateur qui possède une composante orthogonale, orthogonale à chacun desdits équipements utilisateur sélectionnés, qui est plus élevée que la composante orthogonale d'un quelconque autre équipement utilisateur non sélectionné.

**4.** Procédé selon la revendication 1, dans lequel ladite étape de sélection et de formation de groupe est réalisée sur un sous-ensemble desdits multiples équipements utilisateur.

**5.** Procédé selon une quelconque revendication précédente, dans lequel ladite étape de superposition d'une pluralité desdits signaux comprend :

le codage de chacun desdits signaux destinés auxdits équipements utilisateur au sein dudit groupe à l'aide d'une pluralité de codeurs linéaires à champ fini pour former une pluralité de signaux de code de maille ;
la pondération de chacun de ladite pluralité de codes de maille par la multiplication desdits signaux de code de maille par des coefficients de pondération respectifs, chaque coefficient de pondération étant formé à partir d'un produit de nombres premiers distincts, chaque coefficient de pondération étant formé par l'exclusion d'un nombre différent parmi lesdits nombres premiers distincts à partir dudit produit ; et
la combinaison de ladite pluralité de signaux de code de maille pondérés pour former ledit signal superposé ayant une construction de code de maille.

**6.** Procédé selon une quelconque revendication précédente, dans lequel ladite étape de formation desdits vecteurs de précodage comprend la réalisation d'une formation de faisceau à forçage à zéro pour générer des vecteurs de précodage utilisables fournir au moins des signaux d'émission semi-orthogonaux dirigés chacun vers un groupe différent parmi lesdits groupes d'équipements utilisateur.

**7.** Procédé selon une quelconque revendication précédente, ledit procédé comprenant l'émission de multiples flux de signaux vers au moins l'un desdits équipements utilisateur au sein d'un groupe à partir de ladite pluralité de groupes d'équipements utilisateur, lesdits multiples flux étant émis sous la forme d'une pluralité de signaux superposés par ladite antenne correspondante.

**8.** Procédé selon la revendication 7, dans lequel ledit groupe comprenant ledit au moins un équipement utilisateur contient un équipement utilisateur unique.

**9.** Programme d'ordinateur qui, lorsqu'il est exécuté par un processeur, est utilisable pour commander ledit processeur afin qu'il réalise un procédé selon l'une quelconque des revendications 1 à 8.

**10.** Nœud de réseau, ledit nœud de réseau comprenant :

une pluralité d'antennes ;
un circuit de détermination de qualité de canal de propagation pour déterminer des caractéristiques de canal indicatives d'un degré d'orthogonalité et d'un degré de corrélation d'une pluralité d'équipements utilisateur les uns par rapport aux autres ;
un circuit de sélection utilisable pour sélectionner une pluralité desdits équipements utilisateur qui sont déterminés comme ayant un degré élevé d'orthogonalité les uns par rapport aux autres, un nombre de ladite pluralité sélectionnée d'équipements utilisateur étant inférieur ou égal à un nombre de ladite pluralité d'antennes ;
un circuit de détermination utilisable pour déterminer une corrélation de canal de propagation respective entre (i) les équipements utilisateur non sélectionnés, et (ii) chacun desdits équipements utilisateur sélectionnés ;
un circuit de regroupement utilisable pour regrouper un équipement utilisateur sélectionné respectif avec un équipement utilisateur non sélectionné avec lequel l'équipement utilisateur sélectionné respectif possède le degré le plus élevé de corrélation de canal de propagation, en formant ainsi une pluralité de groupes d'équipements utilisateur ;
un circuit de formation de faisceau utilisable pour former un vecteur de précodage pour chacun de ladite pluralité de groupes d'équipements utilisateur ; et
un circuit d'émission utilisable, pour chaque groupe d'équipements utilisateur, pour superposer des signaux destinés auxdits équipements utilisateur au sein dudit groupe, pour appliquer ledit vecteur de précodage correspondant auxdits signaux superposés et pour émettre un signal résultant à partir de l'une desdites antennes ; dans lequel ledit circuit d'émission comprend un circuit de codage configuré pour coder chacun desdits signaux destinés auxdits équipements utilisateur au sein dudit groupe et pour mettre en correspondance chacun desdits signaux codés avec une modulation codée structurale et pour superposer lesdits signaux pour former un code structural superposé, ledit code structural superposé comprenant un code de maille superposé.

11. Nœud de réseau selon l'une quelconque des revendications 10, dans lequel ledit circuit de formation de faisceau est utilisable pour réaliser une formation de faisceau à forçage à zéro pour générer des vecteurs pour fournir au moins des signaux d'émission semi-orthogonaux dirigés chacun vers un groupe différent parmi lesdits groupes d'équipements utilisateur.

Estimate K channels → Select and cluster N·M UEs → Calculate N ZF beams → LPMA-encode M messages per beam → Transmit → LPMA-decode M messages per beam

FIG. 1

| Proposed User Selection Algorithm: First Phase | Proposed User Selection Algorithm: Second Phase |
|---|---|
| 1: initialize $\tau_1 = \{1, \ldots, K\}$ | 16: reconsider all remaining users |
| 2: initialize $i = 1$ | $$\tau = \{1,\ldots,K\} \setminus \cup_{j=1}^{N} S_j$$ |
| 3: for each user $k \in \tau_1$ do | |
| 4:    estimate channels $g_k$ | 17: initialize $m = 2$ |
| 5: for each user $k \in \tau_i$ do | 18: for each user $k \in \tau$ do |
| 6:    calculate $\tilde{g}_k$, the component of $g_k$ orthogonal to the subspace spanned by $\{h_{1,1}, \ldots, h_{i-1,1}\}$ | 19:    for $n = 1, \ldots, N$ do |
| | 20:       calculate $\bar{g}_{k,n}$, the correlation between $g_k$ and $h_{n,1}$ |
| $$\tilde{g}_k = g_k - \sum_{j=1}^{i-1} h_{j,1} \frac{h_{j,1}^\dagger g_k}{\|h_{j,1}\|^2}$$ | $$\bar{g}_{k,n} = \frac{|h_{n,1}^\dagger g_k|}{\|h_{n,1}\| \, \|g_k\|}$$ |
| (when $i = 1$, this implies $\tilde{g}_k = g_k$) | 21: for $n = 1, \ldots, N$ do |
| 7: select the first user for the $i$-th cluster as | 22:    select the most correlated user as |
| $$\pi(i) = \arg\max_{k \in \tau_1} \|\tilde{g}_k\|$$ | $$\pi_n(m) = \arg\max_{k \in \tau} |\bar{g}_{k,n}|$$ |
| 8: $S_i = \{\pi(i)\}$ | 23:    $S_n \leftarrow S_n \cup \{\pi_n(m)\}$ |
| 9: $\tau_{i+1} = \tau_i \setminus \{\pi(i)\}$ | 24:    $h_{n,m} = g_{\pi n(m)}$ |
| 10: $h_{i,1} = g_{\pi(i)}$ | 25:    $\tau = \tau \setminus \pi_n(m)$ |
| 11: $i \leftarrow i+1$ | 26: $m \leftarrow m+1$ |
| 12: if $\tau_{i+1}$ is nonempty and $i \leq N$ then | 27: if $m \leq M$ then |
| 13:    go to line 5 | 28:    go to line 21 |
| 14: else | 29: else |
| 15:    the first phase is completed, go to line 16 | 30:    the second phase is completed |

<div align="center">FIG. 2</div>

EP 3 276 846 B1

FIG. 3

$q_2 \times q_3$

Message uf UE1 → FEC code over finite field $q_1$ → ⊗

$q_1 \times q_3$

Message uf UE2 → FEC code over finite field $q_2$ → ⊗

$q_1 \times q_3$

Message uf UE3 → FEC code over finite field $q_3$ → ⊗

⊕ → mod-$q_1 \times q_2 \times q_3$ → ⊗ → Lattice Superposition Coding $X_1$

ENCODING AT BS

n=2

UE1  UE2  UE3

n=1

Received Signal $y_{1,1}$ → Channel Compensation → mod-$q_1$ → FEC decoder over finite field $q_1$ → Message uf UE1

DECODING AT UE 1

FIG. 4

DECODING AT UE 2

DECODING AT UE 3

FIG. 4 (Continued)

K=100, N=2, M=2, Superposition Constellation = 16QAM

FIG. 5

K=100, N=2, M=2, Superposition Constellation = 256QAM

FIG. 6

Determine propagation channel
characteristics for multiple user equipment

Select user equipment with best channel conditions

Determine orthogonality of other user
equipment wrt selected user equipment

Select most orthogonal user equipment

N selected
user equipment
?

No

Yes

compare correlation of non-selected user
equipment with each of the selected user equipment
and group most closely correlated together

for each group, superimpose signals
intended for user equipment in group

perform zero forcing beamforming to generate N
precoding vectors to be applied to the N superimposed
signals directed at N groups of user equipment

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2014314006 A

### Non-patent literature cited in the description

- **B. KIM et al.** Non-orthogonal multiple access in a downlink multiuser beamforming system. *Proc. IEEE Military Communications Conf. (MILCOM),* November 2013, 1278-1283
- **SHIMEI LIU et al.** *User Selection and Power Schedule for Downlink Non-Orthogonal Multiple Access (NOMA) System*
- Lattice Partition Multiple Access: A New Method of Downlink Non-orthogonal Multiuser Transmissions. **DON FANG et al.** Cornell University Library, 201 OLIN LIBRARY. CORNELL UNIVERSITY, 18 April 2016

- Non-orthogonal Multiple Access in a Downlink Multiuser Beamforming System. **KIMY BEOMJU et al.** MILCOM 2013 IEEE MILITARY COMMUNICATIONS CONFERENCE. IEEE, 18 November 2013, 1278-1283
- Minimum Power Multicast Beamforming With Superposition Coding for Multiresolution Broadcast and Application to NOMA Systems. **CHOI JINHO.** IEEE TRANSACTIONS ON COMMUNICATIONS. IEEE SERVICE CENTRE, March 2015, vol. 63, 791-800
- On decoding algorithms for construction $\pi$ A lattices. **HUANG YU-CHIH et al.** 2015 22nd INTERNATIONAL CONFERENCE ON TELECOMMUNICATIONS. IEEE, April 2015, vol. 37, 260-264